(19) Europäisches Patentamt
European Patent Office
Office européen des brevets

(11) **EP 2 612 010 B1**

(12) **FASCICULE DE BREVET EUROPEEN**

(45) Date de publication et mention
de la délivrance du brevet:
**18.02.2015 Bulletin 2015/08**

(21) Numéro de dépôt: **11758528.1**

(22) Date de dépôt: **22.08.2011**

(51) Int Cl.:
***F02C 9/28*** *(2006.01)*

(86) Numéro de dépôt international:
**PCT/FR2011/051939**

(87) Numéro de publication internationale:
**WO 2012/028804 (08.03.2012 Gazette 2012/10)**

(54) **DETECTION D'UNE INGESTION D'EAU OU DE GRELE DANS UNE TURBOMACHINE.**

ERKENNUNG DES WASSER- ODER HAGELEINTRITTS IN EINEN TURBINENMOTOR

DETECTION OF THE INGRESS OF WATER OR HAIL INTO A TURBINE ENGINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.08.2010  FR 1056836**

(43) Date de publication de la demande:
**10.07.2013  Bulletin 2013/28**

(73) Titulaire: **Snecma**
**75015 Paris (FR)**

(72) Inventeurs:
• **DJELASSI, Cédrik**
**F-91630 Marolles En Hurepoix (FR)**
• **RIOU, Alexandra**
**F-91380 Chilly Mazarin (FR)**

(74) Mandataire: **David, Alain et al**
**Cabinet Beau de Loménie**
**158, rue de l'Université**
**75340 Paris Cedex 07 (FR)**

(56) Documents cités:
**EP-A1- 0 533 567        EP-A1- 0 616 118
FR-A1- 2 531 490        GB-A- 2 447 238
US-A1- 2003 115 883**

**Description**

Arrière-plan de l'invention

L'invention concerne le domaine général de l'aéronautique. En particulier, l'invention se rapporte à la détection d'une ingestion d'eau ou de grêle par une turbomachine d'un moteur d'aéronef.

Une turbomachine de moteur d'aéronef comprend typiquement une chambre de combustion, les gaz de combustion issus de la chambre de combustion entraînant une turbine haute pression (HP) et une turbine basse pression (BP). La turbine HP est couplée par un arbre à un compresseur HP alimentant la chambre de combustion en air comprimé tandis que la turbine BP est couplée par un autre arbre à une soufflante en entrée du moteur.

La soufflante et le compresseur absorbent l'air nécessaire au bon fonctionnement de la turbomachine mais peuvent aussi ingérer, selon les conditions atmosphériques, de l'eau ou de la grêle, par exemple lorsque l'aéronef rencontre un orage ou traverse un corps de nuages. L'eau et la grêle ainsi absorbées peuvent perturber le fonctionnement de la turbomachine.

En fonctionnement au régime plein gaz, le compresseur peut généralement élever suffisamment la température de l'air pour que l'eau ingérée soit vaporisée et portée à une température suffisamment élevée pour ne pas provoquer l'extinction de la chambre de combustion. Par contre, si le moteur est au régime ralenti, par exemple lors d'une trajectoire de descente, en approche, en phase d'atterrissage, l'eau peut parvenir à la chambre de combustion, provoquant l'extinction d'un ou plusieurs brûleurs, voire de la chambre de combustion et l'arrêt du moteur.

Il est donc souhaitable de détecter l'ingestion d'eau ou de grêle et d'adapter le fonctionnement du moteur dans ce cas.

A cet effet, le document FR 2 681 377 propose de détecter une ingestion d'eau en fonction d'une différence entre la température de l'air à l'entrée du compresseur T2 et à la sortie du compresseur T3. De plus, cette détection peut être confirmée par une estimation du rendement de combustion.

Un inconvénient de cette solution est qu'elle nécessite une détermination empirique des caractéristiques du moteur. De plus, selon les circonstances, une ingestion d'eau peut ne pas être détectée. En effet, la différence de température calculée ne permet pas de détecter une ingestion d'eau en toutes circonstances.

Le document US 5 471 831 propose également de détecter une ingestion d'eau à partir de la température de l'air en entrée et en sortie du compresseur, et de la pression dans la chambre de combustion. Ici également, selon les circonstances, une ingestion d'eau peut ne pas être détectée. En effet, les variations de la pression dans la chambre de combustion sont relativement faibles pour pouvoir en tirer des conclusions nettes.

Un dispositif de détection d'ingestion d'eau ou de grêle est également divulgué dans le document EP0533567.

Il existe donc un besoin pour détecter une ingestion d'eau ou de grêle de manière robuste, performante et rapide.

Objet et résumé de l'invention

L'invention a pour but de fournir un procédé de détection d'une ingestion d'eau ou de grêle qui ne présente pas au moins certains des inconvénients précités. En particulier, un but de l'invention est de permettre la détection dans des circonstances variées.

A cet effet, l'invention propose un procédé de détection d'une ingestion d'eau ou de grêle dans une turbomachine conformément à la revendication 1, ladite turbomachine comprenant au moins un compresseur, une chambre de combustion et une turbine,

ledit procédé étant caractérisé en ce qu'il comprend :

- une étape d'estimation de la valeur d'un premier indicateur représentatif d'une ingestion d'eau ou de grêle,
- une étape d'estimation de la valeur d'un deuxième indicateur représentatif d'une ingestion d'eau ou de grêle, ledit deuxième indicateur étant différent du premier indicateur,

une étape de calcul de la valeur d'un indicateur global en additionnant au moins ledit premier indicateur et ledit deuxième indicateur.

Autrement dit, l'indicateur global correspond à la somme d'au moins deux indicateurs différents. Les deux indicateurs étant différents, ils peuvent aboutir à des conclusions différentes. Ainsi, selon les circonstances, en cas d'ingestion d'eau ou de grêle, trois situations peuvent être envisagées :

- les deux indicateurs ont une valeur indiquant une ingestion,
- le premier indicateur a une valeur indiquant une ingestion et le deuxième indicateur a une valeur n'indiquant pas d'ingestion,
- le premier indicateur a une valeur n'indiquant pas d'ingestion et le deuxième indicateur a une valeur indiquant une ingestion.

Comme l'indicateur global correspond à la somme d'au moins le premier indicateur et le deuxième indicateur, sa valeur indiquera une ingestion dans les trois situations précitées. Ainsi, le procédé de détection de l'invention permet de détecter l'ingestion d'eau ou de grêle dans des circonstances variées.

Le procédé de détection peut comprendre :

- une étape de mesure d'une température T3 à l'entrée de la chambre de combustion,

- une étape d'estimation d'une température T3M modélisant la température T3,

dans lequel la valeur du premier indicateur est estimée en fonction d'une différence entre une chute de la température T3 et une chute de la température T3M, et la valeur du deuxième indicateur est estimée en fonction d'une différence entre la température T3 et la température T3M.

Selon un mode de réalisation, la valeur du premier indicateur est estimée en tenant compte d'une fonction de normalisation qui minimise l'importance de faibles chutes de la température T3.

Le procédé de détection peut comprendre :

- une étape de mesure d'une vitesse de rotation N2 du compresseur et de la turbine,

dans lequel la valeur du deuxième indicateur est estimée en tenant compte d'une fonction de normalisation qui dépend d'une variation temporelle de ladite vitesse de rotation N2.

Le procédé de détection peut aussi comprendre :

- une étape de filtrage de la température T3 mesurée,

dans lequel la valeur du deuxième indicateur est estimée en fonction de la différence entre la température T3 filtrée et la température T3M.

Le procédé de détection peut également comprendre :

- une étape de mesure d'un débit de carburant Wf32,
- une étape d'estimation de la valeur d'un troisième indicateur représentatif d'une ingestion d'eau ou de grêle, en fonction d'au moins

ledit débit de carburant Wf32,
dans lequel la valeur dudit indicateur global est calculée en additionnant
ledit premier indicateur, ledit deuxième indicateur et ledit troisième indicateur.

Le procédé de détection peut comprendre :

- une étape de mesure d'une vitesse de rotation N2 du compresseur et de la turbine,

dans lequel la valeur dudit troisième indicateur est estimée en fonction d'une chute de la vitesse de rotation N2.

L'invention propose également un procédé de commande d'une turbomachine conformément à la revendication 8 comprenant au moins un compresseur, une chambre de combustion et une turbine, le procédé comprenant :

- une étape de détermination d'une consigne de débit de carburant dans une plage limitée par une butée supérieure,

- une étape de détection d'ingestion d'eau ou de grêle effectuée selon le procédé de détection ci-dessus,
- en réponse à la détection d'ingestion d'eau ou de grêle, une étape de détermination d'une consigne de débit de carburant dans une plage dépassant ladite butée supérieure.

L'invention propose aussi un procédé de commande d'une turbomachine comprenant au moins un compresseur, une chambre de combustion et une turbine, le procédé comprenant :

- une étape de détection d'ingestion d'eau ou de grêle effectuée selon le procédé de détection selon l'invention ci-dessus,
- en réponse à la détection d'ingestion d'eau ou de grêle ayant entrainé une extinction, une étape sélection d'un débit de carburant de rallumage supérieur à un débit de carburant de rallumage nominal.

Selon une variante, le procédé de commande comprend une étape de détermination d'une consigne de régime ralenti en fonction dudit indicateur global.

De manière correspondante, l'invention fournit un programme d'ordinateur conformément à la revendication 11 comprenant des instructions pour l'exécution d'un procédé de détection lorsque le programme est exécuté par un ordinateur, et une unité électronique conformément à la revendication 12 pour la commande d'une turbomachine, ladite unité électronique comprenant une mémoire contenant un programme d'ordinateur selon l'invention. L'invention fournit également un moteur d'aéronef comprenant une turbomachine et une unité électronique selon l'invention.

Brève description des dessins

L'invention sera mieux comprise à la lecture de la description faite ci-après, à titre indicatif mais non limitatif, en référence aux dessins annexés sur lesquels :

- la figure 1 est une vue simplifiée, en perspective, d'une turbomachine convenant pour mettre en oeuvre un procédé de détection selon un mode de réalisation de l'invention ; et
- les figures 2 à 5 sont des schémas représentant des moyens de détermination d'indicateurs de l'ingestion d'eau ou de grêle.

Description détaillée de modes de réalisation

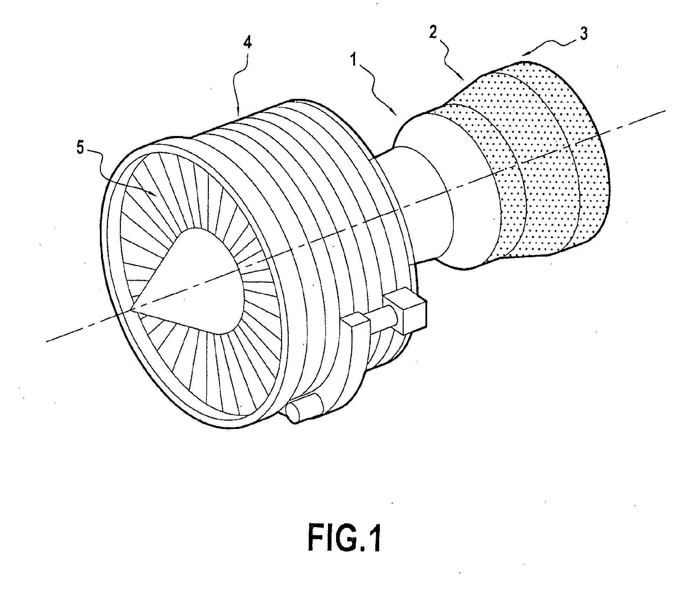

L'invention sera principalement décrite ci-après dans le cadre de son application à une turbomachine de moteur de propulsion pour avion telle que par exemple celle montrée de façon très simplifiée sur la figure 1.

L'invention est toutefois applicable à d'autres turbomachines, notamment des turbines d'hélicoptères, des turbines industrielles ou des turbines de groupes auxiliaires de puissance (APU).

La turbomachine de la figure 1 comprend une chambre de combustion 1, les gaz de combustion issus de la chambre 1 entraînant une turbine haute pression (HP) 2 et une turbine basse pression (BP) 3. La turbine HP 2 est couplée par un arbre à un compresseur HP 4 alimentant la chambre de combustion 1 en air sous pression tandis que la turbine BP 3 est couplée par un autre arbre à une soufflante 5 en entrée du moteur.

Le fonctionnement de la turbomachine est commandé par une unité électronique de commande, qui met en oeuvre une boucle de régulation principale pour asservir le régime de la turbomachine à un régime de consigne fonction de la poussé souhaitée, par action sur le débit de carburant amené à la chambre de combustion 1. La grandeur asservie peut par exemple être la vitesse de rotation N1 de la soufflante 5 et de la turbine BP 3, ou le rapport de pression moteur EPP (pour *« Engine Pressure Ratio »*).

A cet effet, l'unité électronique de commande acquiert des signaux représentatifs de différents paramètres de fonctionnement mesurés, notamment :

- la température T25 en entrée du compresseur HP 4,
- la température T3 en entrée de la chambre de combustion 1,
- le débit de carburant Wf32, mesuré par exemple à partir de la position du doseur de carburant,
- la vitesse de rotation N2 de la turbine HP 2 et du compresseur HP 4.

Par ailleurs, l'unité électronique de commande peut estimer la valeur de certains paramètres en utilisant des modèles. Par exemple, la température T25 peut être estimée par un modèle de température T25M et la température T3 peut être estimée par un modèle de température T3M. Des modèles de température T25M et T3M sont connus de l'homme du métier et il n'est pas nécessaire d'en donner une description détaillée.

Comme expliqué précédemment, une ingestion d'eau ou de grêle peut perturber le fonctionnement de la turbomachine. Ainsi, l'unité électronique de commande met en oeuvre un procédé de détection d'ingestion d'eau ou de grêle et adapte le fonctionnement de la turbomachine lorsqu'une ingestion est détectée.

On décrit maintenant ce procédé de détection d'ingestion d'eau ou de grêle.

Pour détecter une ingestion, l'unité électronique de commande calcule la valeur d'un indicateur global IG en additionnant trois indicateurs différents I1, I2 et I34 :

$$IG = I1 + I2 + I34.$$

Lors d'une ingestion d'eau ou de grêle, la température T3 mesurée diffère du modèle de température T3M. Cette différence se caractérise par une stagnation de la valeur de la température T3M alors que la température T3 chute, par exemple de plusieurs dizaines de degrés. Pour constater cette différence, le modèle T3M peut utiliser en entrée la température T25M et non la température T25, pour éviter toute perturbation de la température T25 par de la glace.

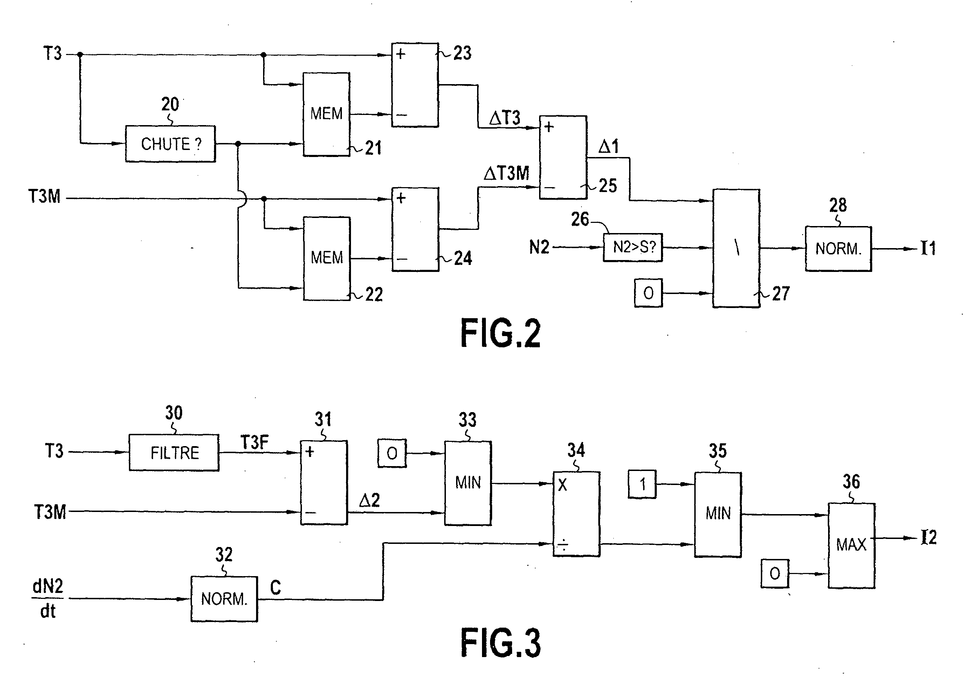

L'indicateur I1 vise à caractériser la différence dynamique entre la température T3 et la température T3M. La figure 2 représente schématiquement des moyens d'estimation de l'indicateur I1, qui peuvent être mis en oeuvre par exemple sous forme d'un module logiciel exécuté par l'unité électronique de commande.

La figure 2 représente un module de détection 20 apte à détecter une chute de la température T3. Par exemple, le module 20 calcule la dérivée temporelle dT3/dt de la température T3 et, lorsqu'il détecte une chute caractérisée par dT3/dt < 0, il génère un signal de mémorisation à destination des modules de mémorisation 21 et 22.

Lorsqu'ils reçoivent le signal de mémorisation du module de détection 20, les modules de mémorisation 21 et 22 mémorisent les valeurs courantes des températures T3 et T3M, respectivement.

Ainsi, le module soustracteur 23 reçoit d'une part la valeur courante de la température T3 et d'autre part la valeur de la température T3 mémorisée par le module de mémorisation 21. Le module soustracteur 23 fournit donc une différence ΔT3 représentant l'ampleur de la chute de la température T3 depuis la détection par le module de détection 20.

De manière correspondante, le module soustracteur 24 reçoit d'une part la valeur courante de la température T3M et d'autre part la valeur de la température T3M mémorisée par le module de mémorisation 22. Le module soustracteur 24 fournit donc une différence ΔT3M représentant l'ampleur de la chute de la température T3M depuis la détection par le module de détection 20.

Le module soustracteur 25 calcule la différence Δ1 entre ΔT3 et ΔT3M.

Un module 26 compare la vitesse de rotation N2 avec un seuil S. En effet, on sait que le modèle de la température T3M n'est valide qu'à partir d'une vitesse de rotation N2 suffisante.

Si la vitesse de rotation N2 est inférieure au seuil S, cela signifie que le modèle de la température T3M n'est pas valide. Ainsi, le module 26 envoi un signal de commutation au commutateur 27 pour sélectionner la valeur 0. Par contre, si la vitesse de rotation N2 est supérieure au seuil S, cela signifie que le modèle de la température T3M est valide. Ainsi, le module 26 envoie un signal de commutation au commutateur 27 pour sélectionner la différence Δ1.

La différence Δ1 ou la valeur 0 est donc transmise par le commutateur 27 au module de normalisation 28. Le module de normalisation 28 fournit la valeur de l'indicateur I1.

Par exemple, le module de normalisation 28 fournit une valeur comprise entre 0 et 1 en appliquant une fonction F croissante à la valeur reçue du commutateur 27, prise en valeur absolue. La fonction F peut minimiser l'importance des faibles chutes de température afin d'éviter de fausses détection dues à une imprécision dynamique du modèle.

Ainsi, si la vitesse de rotation N2 est insuffisante, l'indicateur I1 vaudra 0. Si la vitesse de rotation N2 est suffisante, l'inducteur I1 sera d'autant plus proche de 1 que la différence $\Delta1$ est élevée (en valeur absolue). Une valeur élevée de l'indicateur I1 indique donc une différence élevée entre la chute de la température T3 et la chute de la température T3M, ce qui est caractéristique d'une ingestion.

Autrement dit, une valeur de l'indicateur I1 égale ou proche de 1 indique une ingestion, et une valeur égale ou proche de 0 n'indique pas d'ingestion.

L'indicateur I1 permet de détecter une ingestion de manière très efficace en cas de changement d'état puisqu'il mesure un écart relatif entre la chute de la température T3 et de sa valeur théorique. Il s'affranchit de l'erreur statique sur le modèle de la température T3M mais pas de l'erreur dynamique sur le modèle.

L'indicateur I2 vise à caractériser la différence absolue entre la température T3 et la température T3M. La figure 3 représente schématiquement des moyens d'estimation de l'indicateur I2, qui peuvent être mis en oeuvre par exemple sous forme d'un module logiciel exécuté par l'unité électronique de commande.

La température T3 est filtrée par un filtre 30 qui fournit une température T3F. Le filtre 30 est par exemple un filtre passe-bas d'ordre 1 et permet d'éliminer le bruit de mesure pour éviter les fausses détections.

Le soustracteur 31 calcule la différence $\Delta2$ entre la température T3F et la température T3M.

Comme expliqué précédemment, en cas d'ingestion, la température T3 chute alors que son modèle T3M stagne. Ainsi, le module 33 fournit le minimum entre 0 et $\Delta2$ pour ne pas prendre en compte les situations où T3 est plus élevé que T3M.

La différence $\Delta2$ est normalisée en la divisant, par le diviseur 34, par un coefficient C représentant un coefficient de température minimum d'ingestion. Le coefficient C est déterminé par un module de normalisation 32 qui a en entrée la dérivée temporelle dN2/dt de la vitesse de rotation N2. En effet, la précision du modèle T3M dépend des variations de régime (phase stabilisée, d'accélération, de décélération,...). Le modèle est en particulier plus précis en stabilisé qu'un transitoire. Ainsi, en transitoire, le coefficient C sera plus élevé (en valeur absolue) pour que l'exigence d'une différence entre T3 et T3M pour détecter une ingestion soit moins contraignante.

Les modules 35 et 36 permettent de borner l'indicateur I2 entre 0 et 1.

Ainsi, si la température T3 et supérieure à la température T3M, la valeur de l'indicateur I2 sera 0. Si la température T3 est inférieure à la température T3M, la valeur de l'indicateur I2 sera d'autant plus proche de 1 que la différence $\Delta2$ est élevée (en valeur absolue).

Autrement dit, une valeur de l'indicateur I2 égale ou proche de 1 indique une ingestion, et une valeur égale ou proche de 0 n'indique pas d'ingestion.

L'indicateur I2 est complémentaire à l'indicateur I1, car il permet des détections sans changement d'état. Ceci est particulièrement intéressant au démarrage ou après une réinitialisation de l'unité électronique de commande, car l'indicateur I1 ne permet pas de détection dans de telles circonstances.

L'indicateur I34 est calculé en fonction d'un indicateur I3 et d'un indicateur I4.

Comme expliqué précédemment, l'unité électronique de commande met en oeuvre une boucle de régulation principale pour asservir le régime de la turbomachine à un régime de consigne, par action sur le débit de carburant amené à la chambre de combustion 1. Ainsi, l'unité électronique de commande détermine une consigne de débit de carburant dans une plage limitée par une butée supérieure, dite butée C/P, qui a pour but de protéger le moteur du pompage.

Une ingestion d'eau ou de grêle a tendance à faire chuter le régime de la turbomachine. Ainsi, l'unité électronique de commande aura tendance, en cas d'ingestion, à augmenter la consigne de débit de carburant. Cette augmentation peut aller jusqu'à un fonctionnement sur la butée C/P.

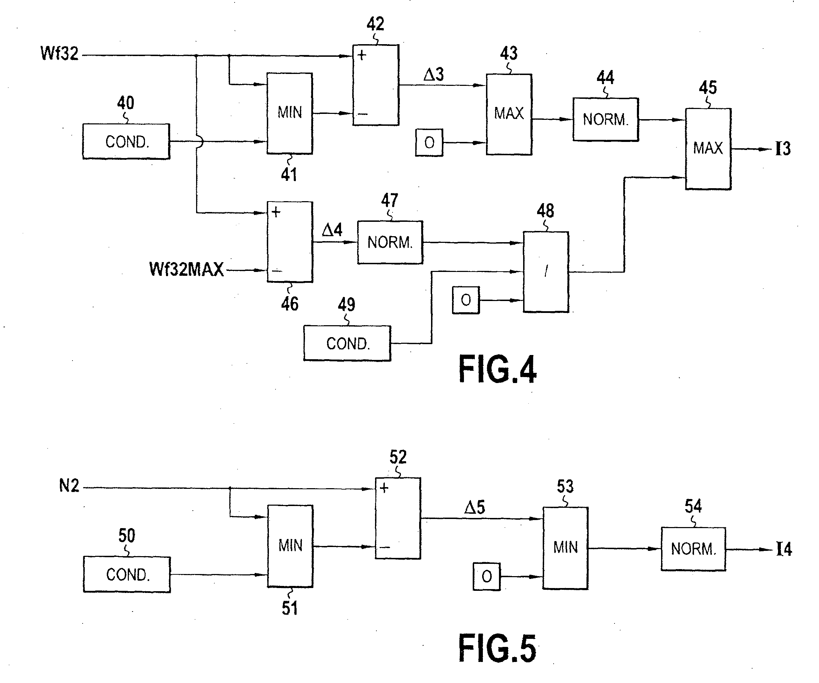

L'indicateur I3 vise à caractériser cette augmentation de débit de carburant ou le fonctionnement sur butée. La figure 4 représente schématiquement des moyens d'estimations de l'indicateur I3, qui peuvent être mis en oeuvre par exemple sous forme d'un module logiciel exécuté par l'unité électronique de commande.

La figure 4 représente un module 40 de détermination de condition de mémorisation. Lorsque l'indicateur I1 est supérieur à seuil prédéterminé et si l'unité électronique de commande ne commande aucune décélération du régime, le module 40 envoi un signal de mémorisation au module de mémorisation 41. Le module de mémorisation 41 mémorise alors la valeur courante du débit Wf32.

Le soustracteur 42 détermine la différence $\Delta3$ entre la valeur courante du débit Wf32 et le débit mémorisé par le module 41. Le module 43 sélectionne le maximum entre la différence $\Delta3$ et la valeur 0 pour ne tenir compte que des augmentations de débit. La sortie du module 43 est fournie au module de normalisation 44 qui permet de limiter l'influence des faibles variations de débit et de mettre en avant les variations importantes. La sortie du module de normalisation 44 représente donc les augmentations du débit Wf32 et est fournie au module 45.

Le soustracteur 46 détermine la marge à la butée, c'est-à-dire la différence entre le débit Wf32 et le débit maximum lors du fonctionnement sur la butée C/P. Le module de normalisation 47 permet de convertir une marge faible en une valeur de sortie importante et une marge importante en une valeur de sortie faible. La sortie du module de normalisation 47 est fournie à un sélecteur 48 qui fournit au module 45 soit la valeur fournie par le module de normalisation 48, soit la valeur 0, en fonction du signal de sélection fourni par le module 49 de détermination d'une condition de sélection. Le module 49 fournit un signal indiquant de sélectionner la valeur fournie par le module de normalisation 48 lors que l'indicateur I1 est supérieur à un seuil prédéterminé.

Ainsi, si l'indicateur I1 est faible, les modules 40 et 49 ne déclenchent pas le calcul de l'indicateur I3, qui vaudra donc 0.

Par contre, si l'indicateur I1 est supérieur au seuil prédéterminé, alors les éléments 40 à 44 déterminent un premier signal représentatif de l'augmentation de débit, et les éléments 46 à 49 déterminent un deuxième signal représentatif de la marge à la butée.

En cas de marge importante, l'augmentation de débit n'est pas limitée. Ainsi, en cas d'ingestion, le premier signal aura une valeur élevée et le deuxième signal aura une valeur faible. Par contre, en cas de marge faible, l'augmentation de débit est limitée. Ainsi, en cas d'ingestion, le premier signal aura une valeur faible et le deuxième signal aura une valeur élevée car inversement proportionnel à la marge.

Le module 45 sélectionne le plus élevé du premier signal et du deuxième signal précité pour fournir l'indicateur I3. Ainsi, dans les deux cas précité, en cas d'ingestion, l'indicateur I3 aura une valeur élevée.

Les modules de normalisation 44 et 47 sont par exemple conçus pour fournir une valeur comprise entre 0 et 1. Ainsi, une valeur de l'indicateur I3 égale ou proche de 1 indique une ingestion, et une valeur égale ou proche de 0 n'indique pas d'ingestion.

Par ailleurs, une ingestion peut provoquer une chute ou une stagnation du régime de la turbomachine. Plus précisément, si la boucle de régulation mise en oeuvre par l'unité électronique de commande vise à maintenir la vitesse de rotation N2 constante, la vitesse de rotation N2 stagne en cas d'ingestion. Cependant, en cas de fonctionnement sur les butées ou si le paramètre régulé n'est pas la vitesse de rotation N2 (par exemple il s'agit du rapport de compression moteur), une ingestion peut provoquer une chute de la vitesse de rotation N2.

L'indicateur I4 vise donc à caractériser les chutes de la vitesse de rotation N2. La figure 5 représente schématiquement des moyens d'estimation de l'indicateur I4, qui peuvent être mis en oeuvre par exemple sous forme d'un module logiciel exécuté par l'unité électronique de commande.

La figure 5 représente un module 50 de détermination de condition de mémorisation. Lorsque l'indicateur I1 est supérieur à seuil prédéterminé, le module 50 envoi un signal de mémorisation au module de mémorisation 51. Le module de mémorisation 51 mémorise alors la valeur courante de la vitesse de rotation N2.

Le soustracteur 52 détermine la différence Δ5 entre la valeur courante de la vitesse de rotation N2 et la vitesse mémorisée par le module de mémorisation 51. Le module 53 sélectionne le minimum entre différence Δ5 et la valeur 0 pour ne tenir compte que des diminutions de régime. La sortie du module 53 est fournie au module de normalisation 54 qui permet de limiter l'influence des faibles chutes de régime et de mettre en avant les importantes chutes de régime. La sortie du module de normalisation 54 fournit l'indicateur I4.

Le module de normalisation 54 est par exemple conçu pour fournir une valeur comprise entre 0 et 1. Ainsi, une valeur de l'indicateur I4 égale ou proche de 1 indique une ingestion, et une valeur égale ou proche de 0 n'indique pas d'ingestion.

L'indicateur I34 est déterminé en effectuant la somme pondérée des indicateurs I3 et I4. La pondération permet de choisir l'importance relative des indicateurs I3 et I4 et peut aussi permettre de limiter la valeur de l'indicateur I34 dans la plage entre 0 et 1.

Comme expliqué précédemment, l'indicateur global IG est la somme des indicateurs I1, I2 et I34. Par ailleurs, comme expliqué précédemment, une valeur proche de 0 d'un des indicateurs I1, I2 et I34 n'indique pas d'ingestion et une valeur proche de 1 d'un des indicateurs I1, I2 et I34 indique une ingestion.

Ainsi, l'indicateur global IG aura une valeur comprise entre 0 et 3, une valeur proche de 0 n'indiquant pas d'ingestion et une valeur proche de 3 indiquant une ingestion.

Si l'indicateur global IG est supérieure à un seuil $S_{ingest}$ prédéterminé, l'unité électronique de commande conclut donc à une ingestion d'eau ou de grêle. L'unité électronique de commande considère que l'ingestion continue tant que la valeur de l'indicateur global IG n'est pas redescendue en dessous d'un seuil $S_{ingestterminée}$, par exemple égal à la moitié du seuil $S_{ingest}$.

Comme expliqué précédemment, lorsqu'une ingestion est détectée, l'unité électronique de commande adapte le fonctionnement de la turbomachine.

Par exemple, en fonctionnement normal, l'unité électronique de commande détermine une consigne de débit de carburant dans une plage limitée par une butée supérieure, dite butée C/P. Lorsqu'une ingestion est détectée, l'unité électronique de commande peut évincer la butée et ainsi déterminer une consigne de débit de carburant supérieure à la butée. Cela permet d'augmenter la richesse du mélange dans la chambre de combustion 1 et d'ainsi maintenir le régime de la turbomachine.

En fonctionnement normal, en cas d'extinction de la chambre de combustion, l'unité électronique de commande utilise une consigne de débit de carburant de rallumage prédéterminée. En cas d'ingestion d'eau ayant entraîné une extinction, une consigne de débit de carburant de rallumage plus élevée peut être utilisée. Cela permet de faciliter le rallumage.

Lors du fonctionnement au ralenti, le risque qu'une ingestion d'eau ou de grêle provoque une extinction de la chambre est accru. Dans les aéronefs de l'art antérieur, un régime ralenti élevé est utilisé pour limiter ce risque, ce qui a pour conséquence notamment de limiter le taux de descente. Dans un mode de réalisation de l'invention, l'unité électronique détermine une consigne de régime ralenti en fonction de l'indicateur globale IG. Plus précisément, si l'indicateur global IG est nul ou faible, cela indique une absence d'ingestion et un régime ralenti faible peut être commandé, sans risquer une extinction de la chambre de combustion. Par contre, si l'indicateur global IG est élevé, cela indique une d'ingestion et un régime ralenti plus élevé est commandé, pour éviter une extinction de la chambre de combustion.

On a décrit précédemment un indicateur global déterminé en additionnant trois indicateurs. Bien entendu, l'invention comprend le calcul d'un indicateur global en additionnant un nombre quelconque d'indicateurs différents.

Les trois indicateurs précédemment décrits ont chacun une valeur comprise entre 0 et 1. Bien entendu, en variante, les indicateurs peuvent avoir des valeurs comprises dans des plages différentes. Cela permet par exemple de donner plus d'importance à un indicateur qu'à un autre.

**Revendications**

1. Procédé de détection d'une ingestion d'eau ou de grêle dans une turbomachine, ladite turbomachine comprenant au moins un compresseur (4), une chambre de combustion (1) et une turbine (2), ledit procédé comprenant:

   - une étape d'estimation de la valeur d'un premier indicateur (I1) représentatif d'une ingestion d'eau ou de grêle, et
   - une étape d'estimation de la valeur d'un deuxième indicateur (I2) représentatif d'une ingestion d'eau ou de grêle, ledit deuxième indicateur étant différent du premier indicateur,

   ledit procédé étant **caractérisé en ce qu'**il comprend en outre :

   - une étape de calcul de la valeur d'un indicateur global en additionnant au moins ledit premier indicateur et ledit deuxième indicateur.

2. Procédé de détection selon la revendication 1, comprenant :

   - une étape de mesure d'une température T3 à l'entrée de la chambre de combustion,
   - une étape d'estimation d'une température T3M modélisant la température T3,
   dans lequel la valeur du premier indicateur est estimée en fonction d'une différence (Δ1) entre une chute de la température T3 et une chute de la température T3M, et la valeur du deuxième indicateur est estimée en fonction d'une différence (Δ2) entre la température T3 et la température T3M.

3. Procédé de détection selon la revendication 2, dans lequel la valeur du premier indicateur est estimée en tenant compte d'une fonction de normalisation qui minimise l'importance de faibles chutes de la température T3.

4. Procédé de détection selon l'une des revendications 2 et 3, comprenant :

   - une étape de mesure d'une vitesse de rotation N2 du compresseur et de la turbine,
   dans lequel la valeur du deuxième indicateur est estimée en tenant compte d'une fonction de normalisation qui dépend d'une variation temporelle de ladite vitesse de rotation N2.

5. Procédé de détection selon l'une des revendications 2 à 4, comprenant :

   - une étape de filtrage de la température T3 mesurée,
   dans lequel la valeur du deuxième indicateur est estimée en fonction de la différence (Δ2) entre la température T3 filtrée (T3F) et la température T3M.

6. Procédé de détection selon l'une des revendications 2 à 5, comprenant :

   - une étape de mesure d'un débit de carburant Wf32,
   - une étape d'estimation de la valeur d'un troisième indicateur (I34) représentatif d'une ingestion d'eau ou de grêle, en fonction d'au moins ledit débit de carburant Wf32,
   dans lequel la valeur dudit indicateur global est calculée en additionnant ledit premier indicateur, ledit deuxième indicateur et ledit troisième indicateur.

7. Procédé de détection selon la revendication 6, comprenant :

   - une étape de mesure d'une vitesse de rotation N2 du compresseur et de la turbine,
   dans lequel la valeur dudit troisième indicateur (I34) est estimée en fonction d'une chute de la vitesse de rotation N2.

8. Procédé de commande d'une turbomachine comprenant au moins un compresseur (4), une chambre de combustion (1) et une turbine (2), le procédé comprenant :

- une étape de détermination d'une consigne de débit de carburant dans une plage limitée par une butée supérieure,
- une étape de détection d'ingestion d'eau ou de grêle effectuée selon le procédé de détection selon l'une des revendications 1 à 7,
- en réponse à la détection d'ingestion d'eau ou de grêle, une étape de détermination d'une consigne de débit de carburant dans une plage dépassant ladite butée supérieure.

9. Procédé de commande d'une turbomachine comprenant au moins un compresseur (4), une chambre de combustion (1) et une turbine (2), le procédé comprenant :

- une étape de détection d'ingestion d'eau ou de grêle effectuée selon le procédé de détection selon l'une des revendications 1 à 7,
- en réponse à la détection d'ingestion d'eau ou de grêle ayant entrainé une extinction, une étape sélection d'un débit de carburant de rallumage supérieur à un débit de carburant de rallumage nominal.

10. Procédé de commande d'une turbomachine comprenant au moins un compresseur (4), une chambre de combustion (1) et une turbine (2), le procédé comprenant :

- une étape de détection d'ingestion d'eau ou de grêle effectuée selon le procédé de détection selon l'une des revendications 1 à 7,
- une étape de détermination d'une consigne de régime ralenti en fonction dudit indicateur global.

11. Programme d'ordinateur comprenant des instructions pour l'exécution d'un procédé selon l'une des revendications 1 à 10 lorsque le programme est exécuté par un ordinateur.

12. Unité électronique pour la commande d'une turbomachine, ladite unité électronique comprenant une mémoire contenant un programme d'ordinateur selon la revendication 11.

13. Moteur d'aéronef comprenant une turbomachine et une unité électronique selon la revendication 12.

**Patentansprüche**

1. Verfahren zur Erfassung eines Eintritts von Wasser oder Hagel in einer Turbomaschine, wobei die Turbomaschine wenigstens einen Verdichter (4), eine Brennkammer (1) und eine Turbine (2) umfasst, wobei das Verfahren umfasst:

- einen Schritt zur Schätzung des Wertes eines ersten Indikators (I1), der für einen Wasser- oder Hageleintritt repräsentativ ist, und
- einen Schritt zur Schätzung des Wertes eines zweiten Indikators (I2), der für einen Wasser- oder Hageleintritt repräsentativ ist, wobei der zweite Indikator von dem ersten Indikator verschieden ist,
wobei das Verfahren **dadurch gekennzeichnet ist, dass** es ferner umfasst:
- einen Schritt zur Berechnung des Wertes eines Gesamtindikators durch Addieren wenigstens des ersten Indikators und des zweiten Indikators.

2. Erfassungsverfahren nach Anspruch 1, umfassend:

- einen Schritt zur Messung einer Temperatur T3 am Eingang der Brennkammer,
- einen Schritt zur Schätzung einer die Temperatur T3 modellierenden Temperatur T3M, wobei der Wert des ersten Indikators in Abhängigkeit von einer Differenz ($\Delta$1) zwischen einem Abfall der Temperatur T3 und einem Abfall der Temperatur T3M geschätzt wird und der Wert des zweiten Indikators in Abhängigkeit von einer Differenz ($\Delta$2) zwischen der Temperatur T3 und der Temperatur T3M geschätzt wird.

3. Erfassungsverfahren nach Anspruch 2, wobei der Wert des ersten Indikators unter Berücksichtigung einer Normalisierungsfunktion, die die Bedeutung von geringen Abfällen der Temperatur T3 herabmindert, geschätzt wird.

4. Erfassungsverfahren nach einem der Ansprüche 2 und 3, umfassend:

- einen Schritt zur Messung einer Rotationsgeschwindigkeit N2 des Verdichters und der Turbine,
wobei der Wert des zweiten Indikators unter Berücksichtigung einer Normalisierungsfunktion, die von einer zeitlichen Änderung der Rotationsgeschwindigkeit N2 abhängt, geschätzt wird.

5. Erfassungsverfahren nach einem der Ansprüche 2 bis 4, umfassend:

- einen Schritt zur Filterung der gemessenen Temperatur T3,
wobei der Wert des zweiten Indikators in Abhängigkeit von der Differenz ($\Delta$2) zwischen der gefilterten Temperatur T3 (T3F) und der Temperatur T3M geschätzt wird.

6. Erfassungsverfahren nach einem der Ansprüche 2 bis 5, umfassend:

- einen Schritt zur Messung einer Treibstoffmenge Wf32,
- einen Schritt zur Schätzung des Wertes eines dritten Indikators (I34), der für einen Wasseroder Hageleintritt repräsentativ ist, in Abhängigkeit von wenigstens der Treibstoffmenge Wf32, wobei der Wert des Gesamtindikators durch Addieren des ersten Indikators, des zweiten Indikators und des dritten Indikators berechnet wird.

7. Erfassungsverfahren nach Anspruch 6, umfassend:

- einen Schritt zur Messung einer Rotationsgeschwindigkeit N2 des Verdichters und der Turbine,
wobei der Wert des dritten Indikators (134) in Abhängigkeit von einem Abfall der Rotationsgeschwindigkeit N2 geschätzt wird.

8. Verfahren zur Steuerung einer Turbomaschine, die wenigstens einen Verdichter (4), eine Brennkammer (1) und eine Turbine (2) umfasst, wobei das Verfahren umfasst:

- einen Schritt zur Bestimmung eines Treibstoffmengensollwerts in einem durch einen oberen Anschlag begrenzten Bereich,
- einen Schritt zur Erfassung eines Wasser- oder Hageleintritts, der gemäß dem Erfassungsverfahren nach einem der Ansprüche 1 bis 7 durchgeführt wird,
- als Reaktion auf die Erfassung eines Wasseroder Hageleintritts, einen Schritt zur Bestimmung eines Treibstoffmengensollwerts in einem den oberen Anschlag überschreitenden Bereich.

9. Verfahren zur Steuerung einer Turbomaschine, die wenigstens einen Verdichter (4), eine Brennkammer (1) und eine Turbine (2) umfasst, wobei das Verfahren umfasst:

- einen Schritt zur Erfassung eines Wasser- oder Hageleintritts, der gemäß dem Erfassungsverfahren nach einem der Ansprüche 1 bis 7 durchgeführt wird,
- als Reaktion auf die Erfassung eines Wasseroder Hageleintritts, der zu einem Abschalten geführt hat, einen Schritt zur Wahl einer Wiederzündungstreibstoffmenge, die größer als eine Nennwiederzündungstreibstoffmenge ist.

10. Verfahren zur Steuerung einer Turbomaschine, die wenigstens einen Verdichter (4), eine Brennkammer (1) und eine Turbine (2) umfasst, wobei das Verfahren umfasst:

- einen Schritt zur Erfassung eines Wasser- oder Hageleintritts, der gemäß dem Erfassungsverfahren nach einem der Ansprüche 1 bis 7 durchgeführt wird,
- einen Schritt zur Bestimmung eines Leerlaufdrehzahlsollwerts in Abhängigkeit von dem Gesamtindikator.

11. Computerprogramm, umfassend Befehle für die Durchführung eines Verfahrens nach einem der Ansprüche 1 bis 10, wenn das Programm durch einen Computer ausgeführt wird.

12. Elektronische Einheit für die Steuerung einer Turbomaschine, wobei die elektronische Einheit einen Speicher umfasst, der ein Computerprogramm nach Anspruch 11 enthält.

13. Luftfahrzeugtriebwerk, umfassend eine Turbomaschine und eine elektronische Einheit nach Anspruch 12.

**Claims**

1. A detection method for detecting ingestion of water or hail in a gas turbine engine, said engine having at least a compressor (4), a combustion chamber (1), and a turbine (2), the method comprising:

· a step of estimating the value of a first indicator (I1) representative of water or hail being ingested; and
· a step of estimating the value of a second indicator (12) representative of water or hail being ingested, said second indicator being different from the first indicator;
the method being **characterized in that** it further comprises:

. a step of calculating the value of a global indicator by summing at least said first indicator and said second indicator.

2. A detection method according to claim 1, further comprising:

· a step of measuring the temperature T3 at the inlet of the combustion chamber; and
· a step of estimating a temperature T3M modeling the temperature T3;
wherein the value of the first indicator is estimated as a function of a difference ($\Delta$1) between a drop in the temperature T3 and a drop in the temperature T3M, and the value of the second indicator is estimated as a function of a difference ($\Delta$2) between the temperature T3 and the temperature T3M.

**3.** A detection method according to claim 2, wherein the value of the first indicator is estimated while taking account of a normalization function that minimizes the importance of small drops in the temperature T3.

**4.** A detection method according to claim 2 or claim 3, further comprising:

· a step of measuring a speed of rotation N2 of the compressor and of the turbine; wherein the value of the second indicator is estimated while taking account of a normalization function that depends on a variation in time of said speed of rotation N2.

**5.** A detection method according to any one of claims 2 to 4, further comprising:

· a step of filtering the measured temperature T3; wherein the value of the second indicator is estimated as a function of the difference ($\Delta$2) between the temperature T3 as filtered (T3F) and the temperature T3M.

**6.** A detection method according to any one of claims 2 to 5, further comprising:

· a step of measuring a fuel flow rate Wf32; and
· a step of estimating the value of a third indicator (134) representative of water or hail being ingested as a function at least of said fuel flow rate Wf32;
wherein the value of said global indicator is calculated by summing said first indicator, said second indicator, and said third indicator.

**7.** A detection method according to claim 6, further comprising:

· a step of measuring a speed of rotation N2 of the compressor and of the turbine; wherein the value of said third indicator (134) is estimated as a function of a drop in the speed of rotation N2.

**8.** A method of controlling a gas turbine engine comprising at least a compressor (4), a combustion chamber (1), and a turbine (2), the method comprising:

· a step of determining a fuel flow rate setpoint within a range limited by a top limit;
· a step of detecting ingestion of water or hail performed in accordance with the detection method according to any one of claims 1 to 7; and
· in response to detecting the ingestion of water or hail, a step of determining a fuel flow rate setpoint in a range that exceeds said top limit.

**9.** A method of controlling a gas turbine engine comprising at least a compressor (4), a combustion chamber (1), and a turbine (2), the method comprising:

· a step of detecting ingestion of water or hail performed in accordance with the detection method according to any one of claims 1 to 7; and
· in response to detecting the ingestion of water or hail that has led to flame-out, a step of selecting a re-ignition fuel flow rate higher than a nominal re-ignition fuel flow rate.

**10.** A method of controlling a gas turbine engine comprising at least a compressor (4), a combustion chamber (1), and a turbine (2), the method comprising:

· a step of detecting ingestion of water or hail performed in accordance with the detection method according to any one of claims 1 to 7; and
· a step of determining an idling speed setpoint as a function of said global indicator.

**11.** A computer program comprising instructions for executing a method according to any one of claims 1 to 10 when the program is executed by a computer.

**12.** An electronic unit for controlling a gas turbine engine, said electronic unit having a memory containing a computer program according to claim 11.

**13.** An aeroengine comprising a gas turbine engine and an electronic unit according to claim 12.

FIG.1

FIG.2

FIG.3

**FIG.4**

**FIG.5**

**EP 2 612 010 B1**

## RÉFÉRENCES CITÉES DANS LA DESCRIPTION

**Documents brevets cités dans la description**

- FR 2681377
- US 5471831 A
- EP 0533567 A